# DEMANDE DE BREVET EUROPEEN

(11) **EP 2 647 949 A1**
(43) Date de publication de la demande: **09.10.2013**
(21) Numéro de dépôt: 12290121.8
(22) Date de dépôt: 04.04.2012
(51) Int. Cl.: G01B 11/30, G01N 21/89

(54) **Méthode et dispositif de mesure de planéité d'un produit métallique**

(71) Demandeur: Siemens VAI Metals Technologies GmbH, 4031 Linz (AT)
(72) Inventeur: Dorel, Laurent, 42600 Montbrison (FR)
(74) Mandataire: Fischer, Michael

(57) **Abrégé**

Une méthode de mesure de planéité d'un produit métallique et un dispositif associé sont présentés. Ladite méthode s'applique à un produit métallique, sous forme soit d'une bande soit d'une plaque d'une ligne de traitement métallurgique, ledit produit à mesurer étant par défaut libre de traction externe, et comprend principalement les étapes suivantes :
a) illuminer sous intensité uniforme une portion d'au moins une face dudit produit ;
b) réaliser une capture d'image d'une ligne lumineuse de la portion illuminée,
c) déplacer relativement la portion illuminée et la ligne lumineuse par rapport au produit selon une direction définie;
d) réitérer les étapes a), b), c) ;
e) collecter les images de lignes sous une répartition bidimensionnelle d'intensités et sélectionner une direction de brin du produit sous laquelle si au moins une onde des intensités est détectée, une variation d'amplitude locale de ladite onde délivre une valeur de défaut local de planéité du brin.

## Description

La présente invention concerne une méthode de mesure de planéité d'un produit métallique telle qu'une bande ou une plaque ainsi qu'un dispositif associé selon les préambules des revendications 1 et 11.

Il existe un dispositif de mesure de planéité d'une bande métallique dans une ligne de traitement métallurgique, en particulier vouée à être laminée. Un exemple issu de la présente demanderesse consiste en un rouleau (connu sous rouleau Pla-nicim^{™} ou autre rouleau communément dénommé « Shapemeter roll ») mesurant des variations d'efforts d'application sur un ensemble de points de section transversale de bande alors que celle-ci défile sur ledit rouleau mesureur. Par ce biais, les dits efforts peuvent être assimilés à des tractions longitudinales subies par la bande, mais aussi plus schématiquement par des brins (par point de mesure transversale) de bande disposés entre les rives de bandes. Ce rouleau mesureur présente une qualité de mesure exceptionnelle pour des bandes défilant sous traction, car subissant majoritairement les tractions lors de la mesure de planéité. Ce dispositif est toutefois plus limité dès lors qu'il s'agit de mesurer non plus une bande (de maximum ∼10 mm d'épaisseur), mais une plaque plus épaisse.

A ce titre, un autre système fonctionne pour mesurer des planéités de plaques de forte épaisseur (par exemple de 5 mm à plus de 150 mm). Ce dispositif à mesure laser présente aussi un coût non négligeable et, comme les autres dispositifs précédents, peut se révéler ainsi financièrement déraisonné voire même attendre ses limites de mesure pour des mesures de planéité de bande alors que la dite bande se trouve dans une phase non liée à des tractions externes (longitudinales). En effet, il s'avère que hors ou du moins à très faible traction de bande, des brins de bande (du centre jusqu'aux rives) présentent des artefacts fort particuliers rendant impossible de mesurer une valeur résiduelle de traction infime et donc une bonne appréciation de la planéité comme suivant le principe du rouleau mesureur de bande en traction.

Une autre méthode de mesure de planéité connue consiste en la mesure d'une vibration d'amplitude d'un produit plat métallique sous traction longitudinale résultant de l'excitation en vibration du dit produit générée par une aspiration par pulsions alternées sur le produit en défilement au travers d'une unité pneumatique (voir publication de la demanderesse EP2344286). De la même façon, cette méthode requiert la présence de traction externe du produit pour le maintenir de part et d'autre de la portion excitée. Cette traction externe peut donc induire un aléa sur la mesure de traction réelle intrinsèque du produit que la présente invention tâche de mesurer.

Finalement, une alternative de mesure de planéité d'un produit métallique consiste, selon TP20110099821, à projeter une matrice lumineuse sur une portion de surface du produit métallique, consistant en une information optique codée binairement (de type franges ou damier, « en noir/blanc ») et un système de visualisation (caméra CCD) faisant une acquisition d'image bidimensionnelle de la matrice projetée qui, en cas de non-planéité du produit sous forme d'onde locale, permet d'enregistrer des décalages de phases entre les franges ou les damiers projetés et celles/ceux d'un réseau idéal de référence (d'une surface plane). A partir de ces mesures de variations de phases, la planéité de la zone surfacique illuminée/visualisée du produit est calculée. Dans le cas d'un produit en défilement (par ex. une bande sous plus de 150m/mn en défilement), il serait toutefois nécessaire, pour un tel système de mesure, d'arrêter la bande en défilement pour réaliser une mesure sans quoi les mesures de phases ne sont plus pertinentes. Même si cette méthode semble ne pas introduire de traction externe sur le produit, cet aspect d'immobilisation du produit est fort gênant pour des installations à défilement continu voire alterné/réversible, mais imposant du moins un déplacement constant (et si possible maximal) du produit. Dans le cas de produit métallique fort peu réflectif ou même à chaud (au moins 400°C), il s'avère de plus difficile d'obtenir un rapport signal-bruit lumineux suffisant sur une surface importante du produit illuminée par la matrice projetée.

Un but de la présente invention est de proposer une méthode de mesure de planéité d'un produit métallique ne subissant par défaut aucune traction (externe) à l'endroit de mesure de la ligne de traitement où elle se trouve, mais pouvant toutefois par extension subir une traction (externe). Il s'agit donc ici de proposer un système plus universel, simple et dynamiquement plus performant que ceux présentés ci-dessus.

Proposer un dispositif associé permettant de mettre en oeuvre la méthode visée est un deuxième but de l'invention tout en garantissant entre autre sa simplicité, son coût réduit et sa haute dynamique de mesure.

L'invention propose ainsi une méthode de mesure de planéité d'un produit métallique selon la revendication 1 et un dispositif associé pour sa mise en oeuvre selon revendication 11.

Ladite méthode de mesure de planéité d'un produit métallique, sous forme soit d'une bande soit d'une plaque d'une ligne de traitement métallurgique, ledit produit à mesurer étant par défaut libre de traction externe, comprend ainsi les étapes suivantes :
a) illuminer sous intensité uniforme une portion (longiligne) d'au moins une face dudit produit ;
b) réaliser une capture d'image d'une ligne lumineuse de la portion illuminée,
c) déplacer relativement la portion illuminée et la ligne lumineuse par rapport au produit selon une direction définie;
d) réitérer les étapes a), b), c) ;
e) collecter les images de lignes sous une répartition bidimensionnelle d'intensités et sélectionner une direction de brin du produit sous laquelle si au moins une onde des intensités (sous le terme « onde », il est compris au moins une variation d'intensité de type « bosse/creux » localement détectée sur plusieurs intervalles successifs du brin) est détectée, une variation d'amplitude locale de ladite onde délivre une valeur de défaut local de planéité du brin.

En effet, sans action de traction externe, et dans le cas où le produit est au plus simplement disposé sur un tapis ou une table de convoyage, le produit ne présente plus que des propriétés intrinsèques en terme de planéité qui se présentent comme des brins sous différentes contraintes internes et donc sous différentes longueurs. Etant donné que les brins sont physiquement accolés, il en résulte donc que les brins les plus longs forment des bosses et des creux visibles en surface (ces bosses et creux pouvant aller d'environ un cm à plus de 30cm de longueur pour des produits telle qu'une bande dimensions 2m x 1km et 2mm d'épaisseur par exemple). Il apparaît que ces effets que nous nommons ici ondes ou ondulations (locales) sont des valeurs de mesures de planéité et que, sous un plan d'éclairage oblique par rapport à la surface métallique du produit et doublement oblique par rapport au plan de visualisation de la surface illuminée, ils induisent des écarts de réflexion lumineuse par rapport à une surface métallique idéalement plane. Ainsi, sachant qu'une capture de ligne lumineuse est réalisée, et dans le cas de bosse ou creux sectionnant cette ligne, des diminutions ou des (ré-)augmentations d'intensité lumineuse de la ligne observée seront enregistrées. La condition pour obtenir une telle condition est que la ligne ou du moins la bande lumineuse projetée sectionne et donc ne soit pas parallèle à la ligne lumineuse dont l'image est capturée.

Enfin, la direction du brin est sélectionnée de préférence selon la longueur du produit, mais il est tout-à-fait possible de la choisir plus oblique jusqu'à transversale sur le produit afin de pouvoir aussi mesurer des défauts de planéité plus répartis en largeur de bande/plaque métallique. Cet aspect de l'invention de pouvoir choisir la direction des brins mesurés permet aussi de rendre la mesure de non-planéité plus dynamiquement adaptée pour évaluer un défaut transversal d'effet de tuile de produit, mais aussi des autres défauts de non-planéités plus longitudinaux dont les ondes détectées les unes après les autres sur un brin présentent des longueurs (ou périodes) variables.

Au plus simple dans une ligne métallurgique ou un banc de test, la méthode selon l'invention prévoit que la portion illuminée est au moins étendue sur la largeur du produit et la direction de brin sélectionnée est selon la longueur du produit. Cet aspect permet de simplement faire défiler le produit face à un ensemble illumination/visualisation (correspondants aux étapes a) et b) précédemment évoquées). Ainsi, un déplacement relatif entre le produit et l'ensemble comprenant le moyen d'illumination et la capture d'image est mis en oeuvre soit par défilement du produit dans la ligne, soit par motion du dit moyen pour un produit immobile dans la ligne. Par la suite, des figures et des sous-revendications illustrent des aspects avantageux de la méthode selon l'invention et présentent des modes de réalisation de dispositifs permettant une mise en oeuvre de la dite méthode.
- Figure 1 :: Dispositif schématique de mise en oeuvre de la méthode de mesure de planéité selon l'invention ;
- Figure 2 :: Arrangement de mesure sur un rouleau déflecteur;
- Figure 3 :: Arrangement de mesure entre des rouleaux déflecteurs ;
- Figure 4 :: Implémentation de la méthode en sortie de laminoir à chaud;
- Figure 5 :: Implémentation de la méthode sur un banc de test ;
- Figure 6 :: Amélioration de dynamique de la méthode de mesure ;
- Figure 7 :: Mesure de planéité d'une bande métallique hors traction.

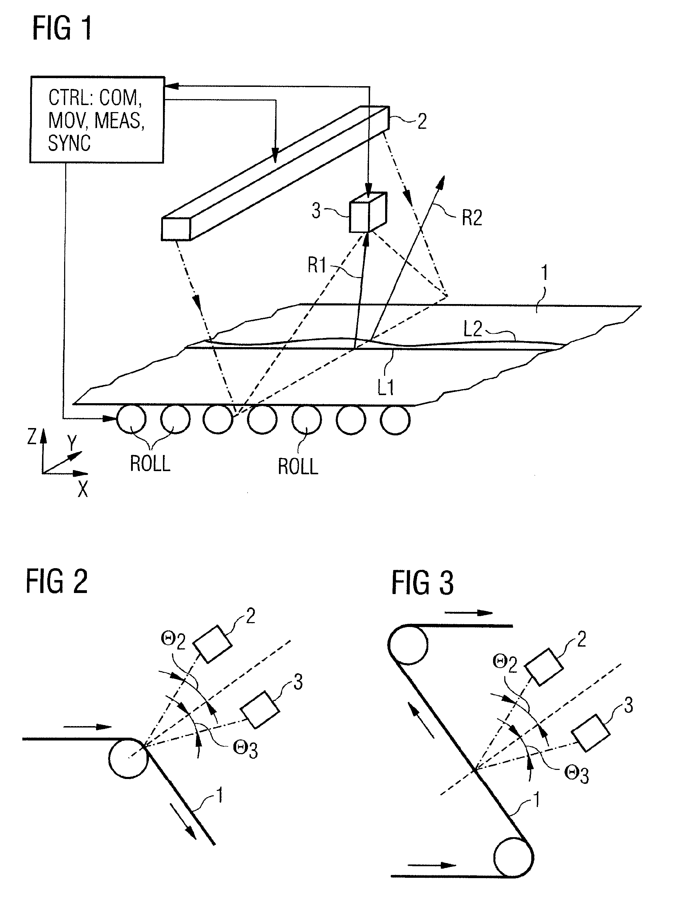

**Figure 1** présente principalement un dispositif de mise en oeuvre de la méthode de mesure de planéité d'un produit (1) métallique, sous forme soit d'une bande soit d'une plaque d'une ligne de traitement métallurgique, ledit produit à mesurer étant par défaut libre de traction externe, comprenant :
- au moins une rampe d'éclairage (2) disposée dans le voisinage d'une face du produit et illuminant une portion (au moins linéaire) de cette face;
- au moins une caméra linéaire (3) de capture d'image de ladite portion ;
- un moyen de transport (ROLL) - ici des rouleaux de convoyage - selon une direction (X) de déplacement du produit dans la ligne de traitement permettant selon ladite direction un mouvement relatif de l'ensemble rampe et caméra par rapport au produit ;
- un module de commande (CTRL, COM, MOV, SYNC) de la rampe et de la caméra afin d'activer et coordonner les étapes a), b), c), d) de la méthode de mesure ;
- une unité (MEAS) de traitement des données délivrées par la caméra recevant les images afin de les collecter et d'en déduire les valeurs de planéité de brins sélectionnés selon l'étape e) de la méthode de mesure.

En particulier, le dispositif comprend une unité de synchronisation (SYNC) entre le module de commande et le moyen de transport. Dans figure 1, ce moyen de transport peut être une cage de laminoir à chaud (ou une planeuse de tôlerie forte à froid ou à chaud), une table à rouleaux, un tapis convoyeur, ou une enrouleuse, ledit moyen de transport étant entrainé afin de faire défiler le produit/bande/plaque (1) selon sa direction longitudinale X. Principalement, le dispositif prévoit que le moyen de transport est un moyen faisant défiler le produit devant l'ensemble formé par la rampe et la caméra ou vice-versa, c'est-à-dire que l'ensemble formé par la rampe et la caméra est translaté par rapport à une face de produit (qui lui peut être alors immobile, par exemple sur un support plan).

Afin de mieux schématiser la mesure de planéité, deux brins (L1, L2) ont été sélectionnés quasi-adjacents et parallèles selon la direction longitudinale X. Il est supposé que le premier brin (L1) a une planéité parfaite (donc le brin est rectiligne selon la direction X) et que le deuxième (L2) brin présente une ondulation indiquant une planéité imparfaite (déviation bosse/creux dans le plan X, Z), le produit (1) étant ici principalement hors traction. Toutefois, le produit pourrait aussi subsidiairement être soumis à une traction externe ici non représentée à la figure 1. Ceci peut être mis en oeuvre par un moyen de faction quelconque de ligne. Dans ce cas, l'unité (MEAS) de traitement des données est connectée à un module de mesure annexe de traction soumise au produis, influant en particulier complémentairement à une traction intrinsèque (mesurée) dudit produis. Si aussi le module de mesure annexe ne mesure par exemple que des valeurs faibles de non-planéité alors la méthode selon l'invention peut apporter une mesure sur un intervalle plus étendu de valeurs de non-planéité.

La méthode selon l'invention selon figure 1 présente ainsi une onde détectée des intensités lumineuses qui résulte d'une variation d'orientation de type creux et bosse dans chaque brin - ici le deuxième brin (L2) - induisant une variation d'amplitude des intensités mesurées (par la caméra linéaire 3) pouvant être assimilée à une évaluation de longueur de chacun des brins sous une propre traction intrinsèque et présentant une propre valeur de planéité. Dans le cas du premier brin (L1) une réflexion lumineuse constante (R1) parvient à la caméra linéaire (3) et l'amplitude mesurée reste maximale le long du brin alors que le produit (1) et l'ensemble formé par la rampe et la caméra sont en déplacement relatif. Ce n'est pas le cas du deuxième brin (L2) pour lequel au cours du déplacement relatif, des variations de réflexion lumineuse (R2) sont enregistrées par le traitement de données (MEAS, connecté à la caméra linéaire) sachant que l'angle principal de lumière réfléchie varie et ne reste pas dans la même position par rapport au champ angulaire de la caméra, prévu pour recevoir les réflexions directes de l'illumination sur le produit (angle d'incidence proche de l'angle de réflexion). De ces variations lumineuses issues d'angles de réflexion lumineuse, les ondes de type bosse/creux peuvent donc être mesurées et finalement la longueur de chaque brin peut être évaluée et transcrite en valeur de planéité.

La méthode selon l'invention prévoit que le produis peut être soumis à des efforts externes de traction longitudinale. A cet effet, la direction du brin mesurée peut elle aussi être sélectionnée dans le plan X, Y afin de mesurer des ondes révélatrices de non-planéités suspectées pour un produit (effet tuile par exemple si l'on pend la direction transversale comme sens de défilement).

Expérimentalement, la méthode selon l'invention permet une mesure très efficace de la planéité du produit à contrôler pour des épaisseurs variables de ligne de traitement, particulièrement entre 0,1 mm et au moins 150 mm. C'est pourquoi elle est particulièrement bien adaptée pour des produits métalliques incluant bande (plus mince) et plaque (plus épaisse). A ce titre, la méthode de mesure ainsi plus universelle est donc applicable en entrée et/ou en sortie d'installation de laminage comme de planage pour des produits élaborés à froid comme à chaud.

à **figure 2** présente un arrangement de mesure sur un rouleau pour lequel la méthode selon l'invention prévoit que l'illumination (2) et la capture d'image (3) sont effectuées pour une section transversale de produit, ladite section étant observée sur un rouleau déflecteur le long d'une de ses génératrices en contact avec le produit (1) en défilement dessus. L'angle (θ₂) formé par le rideau d'illumination (2) par rapport à un plan médian - en fin pointillés - passant par l'axe de rotation du rouleau est le même sinon proche de l'angle (θ₃) formé par le plan de capture d'image (3) passant par rapport au dit plan médian. Grâce à cette configuration et supposant que le rouleau déflecteur sur lequel transite le produit peut être aussi un rouleau mesureur de traction de bande (donc mesureur de planéité), la méthode de mesure selon l'invention vient compléter la mesure de planéité en relevant le domaine des valeurs mesurables de planéité initialement mesurées par le rouleau mesureur. Cette complémentarité de mesures est un atout majeur par exemple si, il s'avère qu'une forte non-planéité existe (produisant par exemple un effet de décollement partiel de la bande enroulée sur un secteur angulaire de surface externe du rouleau) auquel cas le rouleau mesureur de planéité sous traction ne délivre pas de valeur pertinente de planéité/traction à cet endroit. C'est ainsi la méthode selon l'invention qui détecte aisément les défauts de planéité dans les zones de décollement.

La **figure 3** présente un arrangement de mesure (2, 3, θ₂, θ₃) identique à celui de la figure 2 mais disposé entre des rouleaux déflecteurs pour lequel la méthode selon l'invention prévoit que l'illumination (2) et la capture d'image (3) sont effectuées pour une section transversale de produit (1) alors que la dite section se trouve sous tension entre les deux rouleaux déflecteurs, libre de tout support d'une de ses faces, en particulier dans le cas où le produit est une bande de métal en défilement. Naturellement, suivant des configurations de ligne métallurgique, l'orientation spatiale du plan tangentiel formé au contact de déflexion des rouleaux déflecteurs, peut être quelconque. Sous cette configuration et à supposer que la bande en défilement ne soit pas soumise à des effets vibratoires trop importants pour perturber la mesure, des artefacts de mesures de planéité induits par des effets de courbures/usures de rouleau (tel qu'à la figure 2) peuvent être avantageusement écartés. Il est à noter que la présente méthode de mesure de planéité délivre des valeurs de non-planéité allant du cm à quelques dizaines de cm pour des produits de dimensions d'environ 2m x 1km. Des vibrations peuvent ainsi être tolérables en dessous du cm (valeur minimum de mesure de planéité), si la tension de bande est ajustée correctement.

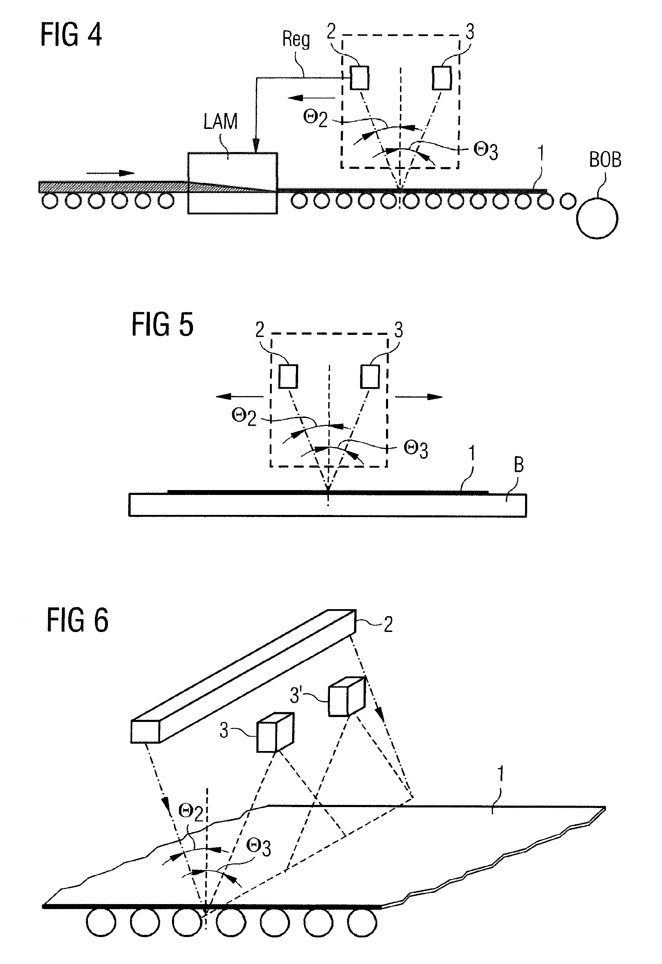

De manière analogue à la figure 1, les **figures 4 et 5** présentent respectivement une implémentation de la méthode selon l'invention en sortie d'un laminoir et une implémentation de la méthode sur un banc de test.

Ainsi, la méthode selon l'invention prévoit que l'illumination et la capture d'image sont effectuées pour une section transversale de produit, ladite section se trouvant sur une zone transversale plane, tel qu'une succession de génératrices supérieures de rouleaux dite table à rouleaux, un tapis de convoyage (voir succession de rouleaux sous le produit 1, figure 4), ou une table de soutien fixe (B) (voir figure 5). L'illumination et la capture d'image sont effectuées pour une section transversale de produit alors que la dite section se trouve en entrée et/ou sortie d'une section de traitement métallurgique comme un laminoir (LAM) ou une planeuse, le produit étant respectivement composé majoritairement d'un métal à froid ou à chaud. Cette mesure de planéité, pour laquelle aucune traction (par convoyage en cours de laminage lorsque la tête de bande laminée n'est pas encore enroulée par la bobineuse de sortie ou en cours de planage) ou une traction externe (principalement exercée par la bobineuse de sortie) sont tout-à-fait possibles suivant la position du produit, est une information majeure caractérisant le produit fraichement laminé ou plané sous des tolérances initiales de planéité appropriées pour que le produit soit voué à subir d'autres opérations avales de procédés métallurgiques, mécaniques/chimiques ou autres pour devenir un produit fini de qualité. La méthode selon l'invention fonctionnant hors de traction ou non est donc dans un tel cas fort bien adaptée. Egalement, si une bobineuse (BOB) est disposée en fin de sortie de convoyage en aval d'un laminoir (LAM), la méthode de mesure selon l'invention peut être exécutée sur une partie de produit défilant avant d'être enroulé sur la bobineuse. Ici la traction de la bobineuse doit être prise en compte dans le processus de mesure de planéité.

Enfin, la figure 4 (ainsi que les autres figures celles que 1, 2, même si non représentée) illustrent une potentielle utilisation avantageuse de la méthode selon l'invention en tant que donnée d'entrée (REG) à un régulateur de fonctionnement de laminoir (LAM) ou d'une planeuse pour laquelle la méthode effectue la mesure de planéité d'un produit issu du laminoir ou de la planeuse, puis transmet des instructions de contrôle pour évaluer et, selon des critères de qualité imposés, corriger la planéité mesurée du produit issu du laminoir ou de la planeuse.

La méthode selon l'invention et un dispositif tel que celui des figures précédentes 1, 2, 3, 4 peuvent aussi être facilement mis en oeuvre à une mesure de planéité impliquant que un déplacement réversible (droite-gauche selon la direction X de la figure 1 ou 4) du produit au cours d'un traitement métallurgique. Ici encore, la mesure peut être effectuée dans ou hors d'un laminoir ou d'une planeuse, sans ou avec traction.

En figure 5, il est à noter que le produit est disposé horizontalement sur un support fixe plan au dessus duquel l'ensemble formé par la rampe (2) et la caméra (3)- sous les angles opposés respectifs (θ₂, θ₃) d'incidence par rapport au plan du produit - est déplacé longitudinalement ou transversalement par un chariot circulant parallèlement à une face inspectée de produit immobile.

Principalement, le dispositif présenté en figure 1 est pour permettre une inspection automatique de bande en défilement, en particulier dans le cadre pour exemple de contrôle de qualité contre des micro-défauts (quelques microns) issus de la manufacture de bande d'acier apte à être bobinées, comprend un premier arrangement d'illumination sur une zone ayant au moins la largeur de la bande et un deuxième arrangement d'acquisition d'images de ladite zone. De tels arrangements sont par exemple bien décrits au travers du brevet FR 05 13105 présentant comme arrangement d'illumination une rampe comportant une série de diodes lumineuses disposés sur la largeur de la rampe et une optique permettant de générer un rideau de lumière provenant des diodes électroluminescentes à haute puissance et traversant au moins la largeur de la bande en défilement. L'arrangement d'acquisition d'image comporte au moins une caméra (au moins linéaire) dont la vitesse d'acquisition est suffisamment rapide en fonction de la vitesse de défilement de la bande pour obtenir des séquences de portion de bandes permettant de reconstituer une image de la bande complète. Les deux arrangements présentent deux axes optiques principaux faisant un angle dit de triangulation et inter-sécants sur la bande. Usuellement des diodes de couleurs (ou longueurs d'ondes) diverses peuvent être choisies pour être installées dans une rampe et la caméra, usuellement une simple caméra noir et blanc (niveau de gris) présente un moyen de filtrage de ladite couleur.

Dans le cas de la présente invention, le dispositif d'inspection, même si analogue, n'est pas prévu pour des domaines de mesures sous le mm, c'est -à-dire il ne délivre pas des valeurs topographiques (en X, Y, Z) de défauts de surface (en X, Y, Z) de produits métalliques, mais mesure des variations d'intensités et donc des portions de longueurs par tranche de quelques cm sur des brins principalement de fortes longueurs (5m ou plus). La méthode selon l'invention est donc une application distincte de mesure pour des systèmes tels que celui de FR 05 13105. Il en ressort qu'un homme du métier désireux de se procurer un tel système pourrait à moindre coût lui faire mettre en oeuvre deux méthodes distinctes de mesure, à savoir non seulement pour lui faire mesurer des micro-défauts de surface mais aussi des défauts plus macroscopiques de traction et donc de planéité. Ces deux méthodes de mesure pourraient collatéralement être implémentées en tant que programme d'ordinateur dans le module de contrôle CTRL et de traitement de données MEAS selon la figure 1 qui serviraient de support des deux algorithmes de mesure de micro-défaut et de planéité.

La **figure 6** présente une amélioration de dynamique de la méthode de mesure selon l'invention (telle que par exemple décrite aux figures 1, 2, 3, 4 ,5) en ce que plusieurs caméras (3, 3') linéaires sont étalées le long d'une transversale de la ligne lumineuse à observer (ici une transversale du produit). Cela présente plusieurs avantages, entre autres :
- augmentation de la dynamique de mesure des amplitudes/intensités car domaine mesuré par caméra plus restreint, donc plus intensivement illuminé/observé - ceci est appréciable dans le cas de produit moins réflectif comme les produits à chaud ou mat/sombre, soumis à de plus faibles réflexions lumineuse de la zone illuminée ;
- meilleur rendu uniforme des intensités aux caméras (car la rampe doit illuminer uniformément sur la portion, ici transversale) - apporte un avantage considérable au niveau des bordures/rives de produit car plus haute répartition de lumière réfléchie, donc mesurable.

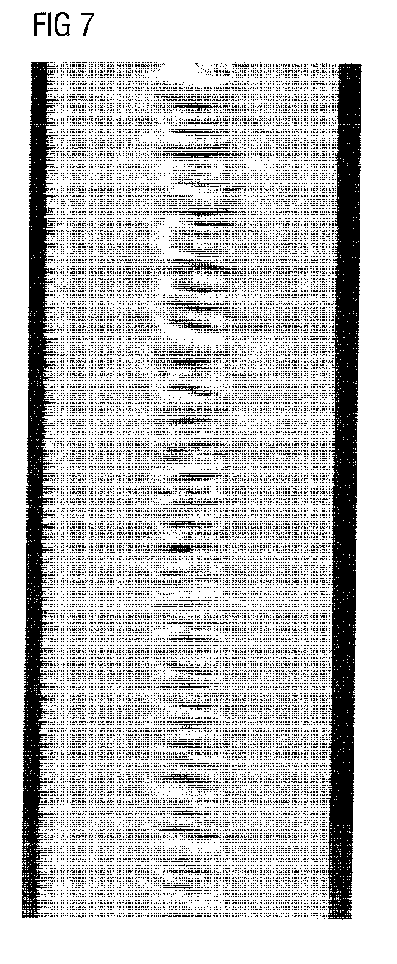

Enfin, la **figure 7** présente un exemple de mesure de planéité d'une bande métallique hors traction obtenue au moyen de la méthode selon l'invention selon la figure 6. La bande métallique mesurée a pour dimension 2mx1km, une épaisseur de 2mm, l'image représente une partie de la bande de 2mx50m. Des ondes de type bosse/creux de l'ordre du cm jusqu'à plusieurs dizaines de cm sont clairement mesurées automatiquement et permettent d'observer les tractions ou défauts de planéité intrinsèques de la bande après un simple et rapide défilement (hors traction ou du moins traction quasi négligeable) de la bande sur un tapis de convoyage. Le dispositif utilisé pour cette mesure est un système adapté de celui décrit par FR 05 13105 comme précédemment décrit et les coûts associés à cette adaptation s'avèrent fort minimes en comparaison de l'acquisition de système de mesure de planéité existant sur le marché actuel.

## Revendications

1. Méthode de mesure de planéité d'un produit métallique, sous forme soit d'une bande soit d'une plaque d'une ligne de traitement métallurgique, ledit produit à mesurer étant par défaut libre de traction externe, ladite méthode comprenant les étapes suivantes :
a) illuminer sous intensité uniforme une portion d'au moins une face dudit produit ;
b) réaliser une capture d'image d'une ligne lumineuse de la portion illuminée,
c) déplacer relativement la portion illuminée et la ligne lumineuse par rapport au produit selon une direction définie;
d) réitérer les étapes a), b), c) ;
e) collecter les images de lignes sous une répartition bidimensionnelle d'intensités et sélectionner une direction de brin du produit sous laquelle si au moins une onde des intensités est détectée, une variation d'amplitude locale de ladite onde délivre une valeur de défaut local de planéité du brin.

2. Méthode selon revendication 1 pour laquelle la portion illuminée est au moins étendue sur la largeur du produit et la direction de brin sélectionnée est selon la longueur du produit.

3. Méthode selon revendication 1 ou 2 pour laquelle le produit et un moyen d'illumination et de capture d'image sont en déplacement relatif, soit par défilement du produit dans la ligne, soit par motion du dit moyen pour un produit immobile dans la ligne.

4. Méthode selon une des revendications 1 à 3 pour laquelle l'illumination et la capture d'image sont effectuées pour une section transversale de produit, ladite section se trouvant sur une zone transversale plane, tel qu'une succession de génératrices supérieures de rouleaux dite table à rouleaux, un tapis de convoyage, ou une table de soutien fixe.

5. Méthode selon une des revendications 1 à 3 pour laquelle l'illumination et la capture d'image sont effectuées pour une section transversale de produit, ladite section étant observée sur un rouleau déflecteur

6. Méthode selon une des revendications 1 a 3 pour laquelle l'illumination et la capture d'image sont effectuées pour une section transversale de produit alors que la dite section se trouve sous tension entre deux rouleaux déflecteurs, en particulier dans le cas où le produit est une bande de métal en défilement.

7. Méthode selon une des revendications 1 à 6 pour laquelle l'illumination et la capture d'image sont effectuées pour une section transversale de produit alors que la dite section se trouve en entrée et/ou sortie d'une section de traitement métallurgique comme un laminoir ou une planeuse, le produit étant respectivement composé majoritairement d'un métal à froid ou à chaud.

8. Méthode selon une des revendications 1 à 7 pour laquelle le produit est soumis à des efforts externes de traction longitudinale et/ou transversale.

9. Méthode selon une des revendications 1 à 8 pour laquelle la planéité du produit est contrôlée pour des épaisseurs variables de ligne de traitement, particulièrement entre 0,1 mm et au moins 150 mm.

10. Méthode selon une des revendications 1 à 9 pour laquelle l'onde détectée des intensités lumineuses résulte d'une variation d'orientation de type creux ou bosse dans chaque brin induisant une variation d'amplitude des intensités mesurées pouvant être assimilée à une évaluation de longueur de chacun des brins sous une propre traction intrinsèque et présentant une propre valeur de planéité.

11. Dispositif de mise en oeuvre de la méthode de contrôle de planéité d'un produit (1) métallique selon une des revendications précédentes comprenant :
- au moins une rampe d'éclairage (2) disposée dans le voisinage d'une face du produit et illuminant une portion de cette face ;
- au moins une caméra linéaire (3) de capture d'image de ladite portion ;
- un moyen de transport (ROLL) selon une direction (X) de déplacement du produit dans la ligne de traitement permettant selon ladite direction un mouvement relatif de l'ensemble rampe et caméra par rapport au produit ;
- un module de commande (CTRL, COM, MOV, SYNC) de la rampe et de la caméra ;
- une unité (MEAS) de traitement des données délivrées par la caméra recevant les images afin de les collecter et d'en déduire les valeurs de planéité de brins sélectionnés.

12. Dispositif selon revendication 11 comprenant une unité de synchronisation (SYNC) entre le module de commande et le moyen de transport.

13. Dispositif selon une des revendications 11 et 12 dont l'unité (MEAS) de traitement des données est connectée à un module de mesure de traction soumise au produit, en particulier complémentairement à une traction intrinsèque dudit produit.

14. Dispositif selon une des revendications 11 à 13 pour lequel le moyen de transport est un moyen faisant défiler le produit devant l'ensemble formé par la rampe et la caméra ou vice-versa.

15. Utilisation de la méthode selon les revendications précédentes 1 à 9 en tant que données d'entrée (REG) d'un régulateur de fonctionnement de laminoir ou d'une planeuse pour laquelle la méthode effectue la mesure de planéité d'un produit issu du laminoir ou de la planeuse, puis transmet des instructions de contrôle pour évaluer et corriger la planéité mesurée du produit issu du laminoir ou de la planeuse.
